# EUROPEAN PATENT SPECIFICATION

(11) **EP 4 246 468 B1**
(45) Date of publication and mention of the grant of the patent: **10.12.2025**
(21) Application number: 22192410.3
(22) Date of filing: 26.08.2022
(51) Int. Cl.: G06V 20/69, G06T 7/00

(54) **METHOD FOR TRAINING AN ARTIFICIAL INTELLIGENCE SYSTEM, METHOD FOR RECOGNIZING AND CLASSIFYING CELLS FOR PATHOLOGICAL CELL AND TISSUE EXAMINATION, CLASSIFYING SYSTEM, COMPUTER-READABLE MEDIUM**
VERFAHREN ZUM TRAINIEREN EINES SYSTEMS DER KÜNSTLICHEN INTELLIGENZ, VERFAHREN ZUR ERKENNUNG UND KLASSIFIZIERUNG VON ZELLEN FÜR PATHOLOGISCHE ZELL- UND GEWEBEUNTERSUCHUNGEN, KLASSIFIZIERUNGSSYSTEM, COMPUTERLESBARES MEDIUM
PROCÉDÉ D'APPRENTISSAGE D'UN SYSTÈME D'INTELLIGENCE ARTIFICIELLE, PROCÉDÉ DE RECONNAISSANCE ET DE CLASSIFICATION DE CELLULES POUR EXAMEN PATHOLOGIQUE DE CELLULES ET DE TISSUS, SYSTÈME DE CLASSIFICATION, SUPPORT LISIBLE PAR ORDINATEUR

(30) Priority: 18.03.2022 DE 102022106387
(43) Date of publication of application: 20.09.2023
(73) Proprietor: Mindpeak GmbH, 20359 Hamburg (DE)
(72) Inventor: PÄPPER, Marc, 20257 Hamburg (DE); LANG, Tobias, 20359 Hamburg (DE)
(74) Representative: Meissner Bolte Partnerschaft mbB

(56) References cited:
- WO-A1-2021/226382
- US-A1- 2020 388 029
- YOO INWAN ET AL: "PseudoEdgeNet: Nuclei Segmentation only with Point Annotations", 10 October 2019, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 731 - 739, XP047522628

## Description

The present disclosure concerns a method for training an artificial intelligence system, a method for recognizing and classifying cells for pathological cell and tissue examination, a classifying system, and a computer-readable medium.

The current practice in pathology to examine a cell or tissue sample, i.e. from a biopsy or a cytological sample, is manual. The standard of care to assess and define the status of a disease, e.g. cancer, is conducted using microscopical analysis. For this, a doctor takes a biopsy or a cytology smear and sends it to a pathologist for diagnosis. In the pathological laboratory, the biopsy tissue is cut into thin slices while the cells of a cytological smear are attached to the slide. Each slide is stained with dyes such as hematoxylin and eosin stain, also referred to as H&E stain. Using such dyes, the morphology of the cells is made visible. Often, an additional step of immunohistochemical (IHC) staining is performed, in which antibodies are used to bind on antigens in the tissue sample. In this application, the antigens serve as biomarkers. One of the most well-known biomarkers is Ki67. The antibodies can be linked to a dye. After the antibodies bind to the antigen in the tissue or cell sample, the dye is activated, and the antigen can then be seen under a microscope. Immunohistochemistry is used to help diagnose diseases, such as cancer. It is further used to help to tell the difference between different types and stages of cancer and establishes the ground for treatment decisions.

Manually analyzing the slides is a time-consuming and repetitive work, which despite its frequency, remains demanding and error-prone, even for experts. Furthermore, keeping the same quality of standard between a plurality of slides and readers is a challenge and can often not be achieved by manual analysis. If the quality of analysis is insufficient, wrong treatment decisions can be made, which lead to insufficient patient care.

Therefore there is a need to automate the aforementioned analysis and to ensure a high quality standard and increased reproducibility across all slides analyzed. Given the complexity of the task, conventional systems that rely on traditional computer vision methods and manually defined rules are insufficient to achieve the desired level of quality. Instead, methods of artificial intelligence are of particular interest to solve this problem. Methods of artificial intelligence and in particular deep learning form the state of the art of image recognition and are used industrially from autonomous driving to face recognition and e-commerce. Instead of setting fixed coded rules by a human expert, an artificial intelligence system learns statistical patterns from sample data. As there has been a significant improvement in the quality of image recognition, this field has gained interest in medicine, especially in pathology.

Therefore, automated image recognition using artificial intelligence systems is becoming increasingly important in pathological diagnostics.

To automatically analyze stained slices of tissue, scanners are used that can digitize large quantities of glass tissue slides that contain the tissue to be analyzed. It is already known to perform the analysis of the slides based on digital images that are produced by the scanners using conventional systems using computer vision methods. A scanned version of a glass slide with tissue samples is also referred to as a whole slide image (WSI). It is further known to automatically analyze the WSIs with artificial intelligence systems. Still, most of the available systems are of pure scientific interest and not of clinical relevance yet. One of the reasons is that artificial intelligence systems often fail to analyze heterogeneous tissue image data correctly. For example, scanners used in practice all produce digital images with vastly different image characteristics.

Scanners of two different manufacturers may produce WSIs that significantly differ in the colors, the contrast and other important attributes of the underlying images. Due to this, it is very difficult to provide artificial intelligence systems that generalize well over scanners of different manufacturers or different product lines as well as over other sources of image variability like the staining system used to prepare the tissue glass slide.

The paper
Yousif M, van Diest PJ, Laurinavicius A, et al. Artificial intelligence applied to breast pathology. Virchows Archiv : an International Journal of Pathology. 2022 Jan;480(1):191-209. DOI: 10.1007/s00428-021-03213-3. PMID: 34791536.
summarizes state of the art algorithms to automatically detect and classify cells of WSIs.

Furthermore, the patent publication WO 2020/243556 A1 describes a neural network to identify regions of interest in a WSI. This publication also describes the classification of two or more regions as well as an evaluation of tumor cells. Still, the aforementioned prior art does not address the problem of scanner variability, staining variability or variabilities in tissue slide preparation due to different laboratory processes.

US 2020/388029 A1 describes a machine learning approach to detecting tumors based on analyzing tumor-infiltrating lymphocytes.

Based on the above, it is an object of the present invention to allow for digital histopathological tissue examination using artificial intelligence in an automated manner. In particular, it is an object of the invention to provide a solution that generalizes well over the digital images produced by different slide scanners, i.e. that generalizes well over a large number of digital images with variable image characteristics, different staining systems and different laboratory processes. It is further in particular an object of the present invention to allow for histopathological tissue examination with high quality and high reproducibility. Even further, it is in particular an object of the present invention to reduce the time required to perform histopathological tissue examination. It is even further an object of the present invention to support the expert in making a diagnosis for the analyzed tissue sample.

The object is solved by the subject-matter of the independent claims.

In particular, the object is solved by a method for training an artificial intelligence system and for recognizing and classifying cells for histopathological tissue examination, under use of the artificial intelligence system, wherein in a learning stage, the following steps are performed:
a) manual marking of cells to be detected by the artificial intelligence system in digital images, for example whole slide images, WSIs, of histological tissue sections,
b) each marking is assigned to either one of at least one tumor cell class or one of at least one non-tumor cell class, wherein the method further comprises providing a statistical distribution indicating a probability that a pixel is a cell center around the actual cell center of a particular cell, whereby the statistical distribution is used to create marked digital images that reflect the statistical distribution of the cell centers;
c) a number of marked digital tissue images, in particular WSIs, according to steps a) and b) are entered into the artificial intelligence system for deep learning purposes,
d) the artificial intelligence system learns characteristics of the at least one tumor cell class and the at least one non-tumor cell class from the marked digital images, in particular WSIs, to establish a model for cell detection and classification.

In an analysis stage, the following steps are performed:
e) obtaining digital images, in particular WSIs, of histological tissue sections,
f) according to the model, the artificial intelligence system detects the cells and classifies them into the at least one tumor cell class and/or the at least one non-tumor cell class.

A core of the invention is to use marked cells in digital images of histological tissue sections and to train an artificial intelligence system, which can be used to detect cells and classify them into at least one tumor cell class and at least one non-tumor cell class. Using this approach, it is possible to fully automate the task of detecting cells and classifying the cells into tumor cells and non-tumor cells. The digital images for the analysis stage can be obtained in a data format indicating an image, for example a tiff-format. The digital images each indicate a slide containing tissue. The resolution of such images may be of up to 200,000 pixels times 100,000 pixels or more. The resolution of such images may be such that 0.25, 0.5 or 1.0 µm are shown per pixel. Such digital images are in some embodiments scanned by at least one scanner system and provided by an image management system, which is adapted to store the digital image in a data storage. Moreover, in one embodiment, the digital images can be accessed using a read library, i.e. an application programming interface (API) used to access all or certain parts of that image, optionally in a specific resolution. In one embodiment, the digital images can be implemented as WSIs, indicating an entire slide. Still, in other embodiments, digital images only indicate a part or multiple parts of a scanned slide.

In one embodiment, the manual marking may be performed by point annotations, which may be placed into or nearly into the middle of the tumor cells, thereby marking the center, i.e. the center-area of a cell. When the markings indicate the cell center, the artificial intelligence system may be adapted to detect cell center areas as part of the cell detection. Therefore, the problem of identifying cells is simplified as only a cell center or the cell center area needs to be detected. In particular, marking the cell center greatly simplifies the marking process, as an expert only needs to mark a cell center and not identify and mark the contour of a cell. As a result, it becomes much easier to create a large number of training samples that are used to train the artificial intelligence system.

In addition to manual marking, the method may further comprise creating artificial training data by creating permutations of the digital images or parts of the digital images that are manually marked. By creating permutations, e.g. rotating, mirroring or manipulating color channels, a greater number of training samples can be automatically created, thereby leading to a greater robustness of the trained artificial intelligence system.

In one embodiment, detecting the cells may comprise identifying, for each pixel, whether the pixel belongs to a cell center or not a cell center. Using such an approach, the digital image is segmented in cell centers and non-cell centers.

The method comprises providing a statistical distribution, indicating a probability that a pixel is a cell center around the actual cell center of a particular cell. Thereby, it is made possible to represent uncertainties and inaccuracies in the training data. This is beneficial as the expert performing the marking will often not be able to mark the exact cell center. Using a statistical distribution it is possible to create further marked digital images as training data that reflect the statistical distribution of the cell centers. A possible statistical distribution may be a Gaussian distribution.

In one embodiment, the digital image, in particular the WSI, may be subdivided in subareas by tiling in Fields of View (FOV). By tiling the digital image, each tile, i.e. each FOV, can be processed independently and therefore in parallel. This speeds up the processing of the entire whole slide image.

In one embodiment, the FOVs may be overlapping subareas.

In one embodiment, the FOVs may be separated to contain either a cell area, cell path, or a cell surrounding area, context path.

By separating the cell area and the surrounding area, the two different areas of the digital image may be processed separately. In particular, the artificial intelligence system may be adapted to process the cell path in a first processing path and the cell surrounding area in a second processing path. Preferably, the processing path refers to paths through a single neural network. That is, a neural network may comprise layers, which operate on the cell path and the context path, and in addition the neural network may comprise layers that only operate on the cell path and layers that only operate on the context path. Thereby, it is made possible that the neural network is trained to derive feature detectors that are specific to the cell path and context path, respectively. As a result, the individual performance of the respective feature detectors within the neural network may increase.

In one embodiment, the artificial intelligence system may comprise an input layer section that may be adapted to receive a single tile, or a FOV, of the digital image. For example, such a tile or FOV may have a size of less than 1000 by 1000 pixels, preferably less than 500 by 500 pixels. In a second layer section of the artificial intelligence system, the input tile or FOV may be divided into the context path and the cell path. The cell path and the context path may be each fed into the respective processing paths. Alternatively, the dividing of the FOV or tile in the context path and cell path is performed outside the neural network, for example in a separate entity. After the processing of the specific context and cell path by specific processing paths of the artificial intelligence system, the artificial intelligence system may further comprise a detection and a classification path. The detection path may be adapted to receive the result of the cell path processing path of the artificial intelligence system to detect a cell center. The classification section of the artificial intelligence system may receive as input the output of the cell path and the context path processing paths of the artificial intelligence system. The output of the detection section and the classification section may be combined in an output layer to produce an output, indicating a cell center and whether the cell is of a tumor cell class or a non-tumor cell class and optionally, which of those specific classes.

By providing the aforementioned architecture of the artificial intelligence system, a superior detection of cell centers and classification results are achieved. In particular, the aforementioned architecture generalizes well over data from unseen scanners and slide-staining systems, i.e. digital images, in particular WSIs, that may have a different coloring or contrast to the training data.

In one embodiment, the artificial intelligence system may predict, for every individual pixel of a FOV, if it represents the cell center and if not, the distance to the cell center. In one embodiment, this is implemented by simply indicating the distance to the cell center, whereby a distance of zero may indicate that the pixel is in fact the cell center. By providing a distance to the cell center, the probability can be computed whether a pixel may in fact be a cell center even if the artificial intelligence system states that the distance to the cell center is non-zero. Thereby, inaccuracies in the training data do not harm the artificial intelligence learning process, the artificial intelligence is trained to deal with uncertainties, and the artificial intelligence system is made more robust.

In one embodiment, classified cells, in particular of step f) of the aforementioned method, may be grouped and statistically analyzed, resulting in at least one diagnostic score. For example, the artificial intelligence system may execute a clustering algorithm on the classified cells. Thereby, the artificial intelligence system may designate areas in the analyzed digital image that indicate tumorous or non-tumorous cells of a particular type. For example, the artificial intelligence system may indicate that cells are of a biomarker-positive or biomarker-negative tumor type with regards to the staining of their nucleus or membrane based on an antibody staining. Therefore, it is in one embodiment possible that the artificial intelligence system indicates regions that contain a large number of positive tumor cells.

In one embodiment, a diagnostic score may indicate a ratio of tumor cells of different types in one region as identified by the artificial intelligence system. This may be achieved, for example, by counting the number of positive tumor cells and the number of negative tumor cells and by computing the ratio of the two.

By providing a diagnostic score in the aforementioned way, the artificial intelligence system may provide the expert with an indication of the characteristic of the tumor in the digital image.

In one embodiment, the artificial intelligence system may be adapted to classify every individual pixel of a FOV into the at least one tumor cell class or into the at least one non-tumor cell class.

In one embodiment, the artificial intelligence system may be adapted to compare the counted number of biomarker-positive tumor cells to biomarker-negative tumor cells and compute a diagnostic score according to their ratio. In particular, the diagnostics score can be the ratio itself. Of course, the aforementioned can also be performed not only on biomarker-positive and biomarker-negative tumor cells but also on any first class of cells and any second class of cells as well as on any other score calculation based on counts of cell classes.

In one embodiment, the artificial intelligence system may comprise a tumor recognition algorithm, which may be adapted to select in the digital image regions with a higher density of tumor cells than the surrounding regions and the detection and classification step, in particular step f), may be performed in the regions of higher density of tumor cells, in particular only performed in the regions of higher density of tumor cells. By providing the tumor recognition algorithm, it is possible to further concentrate the processing power of the artificial intelligence system on regions, wherein a high number of tumor cells are located, potentially tumor cells of a particular class. Other areas do not have to be further investigated, which saves processing time.

In one embodiment, a tissue detection model may be preceding the tumor recognition algorithm, which may reduce the application of the tumor recognition algorithm only to parts of the digital image containing tissue. The tissue detection model may be adapted to detect tissue of the digital image, thereby segmenting the digital image into tissue and non-tissue regions. By providing the tissue detection model it is possible to concentrate the processing power of the tumor recognition algorithm only on regions wherein tissue is located. Non-tissue containing areas on the digital image do not have to be further investigated, which saves processing time.

In one embodiment, one or all of the aforementioned algorithms or functions may be implemented as part of an artificial neural network, in particular a fully convolutional neural network.

The object is further in particular solved by a computer-readable medium, storing instructions that, when executed by at least one processor, cause the at least one processor to implement a method as described above.

Similar advantages are present as were described with respect to the method.

The object of the invention is further in particular solved by a classifying system for performing a method as described above, according to claim 13.

In one embodiment, the artificial intelligence processor may comprise a correction stage wherein the artificial intelligence processor is configured to receive corrected classification results and to re-adjust the mutual connections between the neurons based on the corrected classification results.

With the respective embodiment, it is possible to learn from new examples, thereby further improving the system.

In one embodiment, the corrections may comprise distance data of the analyzed cell center from the real cell center, and wherein the artificial neural network may be configured to readjust the mutual connections between the neurons.

In one embodiment, the corrections may comprise the correction of wrong classifications.

In one embodiment, the artificial intelligence processor may be configured to subdivide the digital image into subareas FOVs and to perform the classification of the subareas FOVs separately, which FOV is preferably separated into a cell area and a cell surrounding area.

In one embodiment, the artificial neural network may comprise several substructures, which may be configured to independently process at least one cell area and at least one cell surrounding area of the digital image, respectively, in particular of at least one FOV, in parallel, particularly specialized to the cell areas, cell path, on the one hand and to the cell surrounding areas, context path, on the other hand.

Further embodiments are indicated by the dependent claims.

In the following, different embodiments are described with reference to the accompanying figures, wherein:
- Fig.1: shows a WSI with annotated data;
- Fig. 2: schematically illustrates the marking process of WSIs;
- Fig. 3: shows a schematic of an artificial intelligence system;
- Fig. 4: shows a WSI with FOVs;
- Fig. 5: shows a schematic of an artificial neural network;
- Fig. 6: shows a schematic of a classifying system; and
- Fig. 7: shows a flow diagram of a method for training an artificial intelligence system.

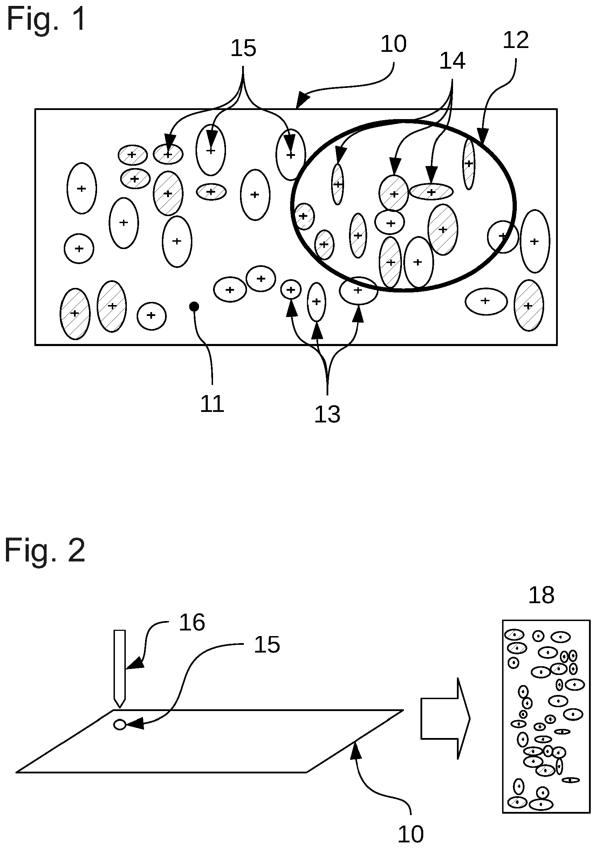

Fig. 1 shows a digital image. In the embodiment of figure 1, the digital image is a whole slide image, WSI. It should be understood that the following description is not limited to WSIs but can also be applied to other types of digital images. The WSI 10 comprises a plurality of cells 13, 14. The WSI 10 is a digital representation of a slide that has a tissue sample or cells on it. This slide can be scanned by a scanner, which in turn produces the digital WSI 10. The WSI 10 can be stored as a tiff image on a storage device. Moreover, the WSI 10 can have a resolution of more than 100,000 times 200,000 pixels. To simplify accessing the WSI 10, a read library may be provided, which allows programmatically accessing the WSI 10 in various resolutions. For example, the read library may indicate that the WSI 10 is provided with a resolution of, for example, 0.25 or 0.5 µm per pixel. Other resolutions are possible as well. In particular, accessing the WSI 10 may be made with respect to different degrees of magnification. Therefore, it is possible to access the WSI with different degrees of details.

The WSI 10 as shown in Fig. 1 comprises tumor cells 14 and 15. These tumor cells can be identified according to their shape, morphology and cell context. The preparation and staining of the slide is performed before the WSI 10 is scanned and digitized. Therefore, the WSI 10 already includes visual information on the structure and morphology of the tumor cells 14 and 15. Moreover, the tumor cells 14 and 15 can be categorized into two or more classes of tumor cells using a dye that stains, e.g. the biomarker Ki67, which is used to highlight cell growth. As an example, such a biomarker may be used to identify a specific class of fast growing tumor cells in a WSI 10. Biomarker-positive tumor cells 14 are marked with a dye, whereas biomarker-negative tumor cells 13 remain unstained. Alternatively, other biomarkers can be used and the aforementioned example is not to be understood to limit the invention to the use of Ki67.

In the present embodiment, the number and distribution of biomarker-stained tumor cells 14 are considered to be the decisive factor for a doctor to make a diagnosis as well as choosing a suitable treatment against the tumor. Therefore, it is an object to count the number of cells belonging to a specific cell class defined by a specific type and/or pattern of biomarker staining 14 within a specific Region of Interest 12 and relate their numbers to each other in a diagnostic score. For example, if the number of biomarker-positive tumor cells 14 exceeds a threshold value within the Region of Interest 12, a treatment with a specific drug may be suggested to the patient. Even further, a diagnostic score may be computed by computing the ratio of biomarker-positive tumor cells 14 and biomarker-negative tumor cells 13 within the Region of Interest, in which the number of biomarker-positive tumor cells 14 exceeds the threshold value. The diagnostic score may indicate the characteristics of the tumor like the growth rate in the cell sample that is analyzed digitally using the present invention.

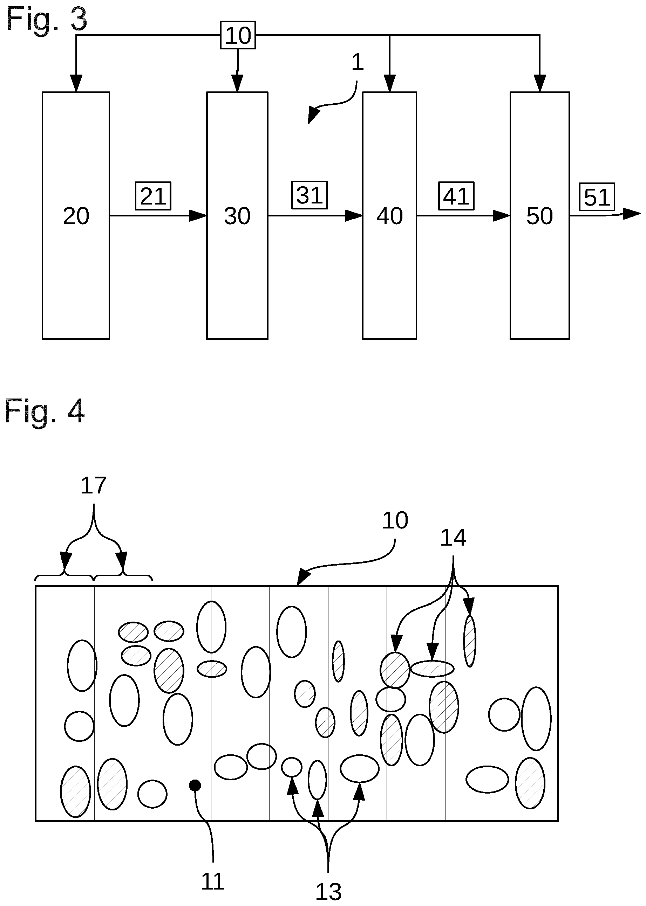

To simplify counting and marking the tumor cells 13, 14, in a training phase, the cell center 15 of each biomarker-positive tumor cell 14 and biomarker-negative tumor cell 13 may be stored with the WSI 10. For example, a digital mask can be created, storing for each pixel, whether the pixel is a cell center 15 or not. In an easy implementation, this can be a binary mask. Moreover, for each cell center 15, it may be stored whether the corresponding cell 13, 14 is a biomarker-negative tumor cell 13 or a biomarker-positive tumor cell 14. This data is used to train an artificial intelligence system, as will be described in more detail with respect to Fig. 3.

The WSI 10 further comprises a tissue area 11.

Fig. 2 is a schematic representation of the marking process to create training data to train the artificial intelligence system. The WSI 10 can be marked using a digital pen 16, such that the person conducting the manual marking can place the digital pen 16 into the cell center 15.

As it is very difficult for a person to perfectly mark the cell center with a digital pen 16, the present embodiment uses a Gaussian distribution to indicate the probability that the cell center is the pixel as marked by the person conducting the marking process or a surrounding of that particular marked pixel. Using such an approach allows the creation of more training data in an easy fashion and to account for the imperfect marking by an expert that needs to perform the marking. The output of the marking process is a WSI containing marked or labeled cells 18, which may be used as a training sample for the artificial intelligence system. This process is repeated for a great variety of cells on WSIs 10. In particular, a suitable training corpus may include tens of thousands of marked cells on WSIs 18. It is further possible to create synthetic training data by conducting image manipulation on the WSIs with marked cells 18. For example, rotation, mirroring or other permutations as well as the change of colors, contrast, saturation and/or hue may be performed on the WSI containing marked cells 18 to create synthetic training data.

Fig. 3 shows a schematic of an artificial intelligence system 1. The artificial intelligence system 1 comprises a tissue detector 20, a tissue segmenter 30, a single cell recognition and classification unit 40, as well as a Region of Interest finder 50.

The artificial intelligence system 1 receives as input a WSI 10, which is provided to the tissue detector 20. In the present embodiment, the WSI 10 comprises a digital representation of an entire scanned slide in different resolutions. That is, in addition to the full resolution image, the WSI 10 comprises downsampled versions of the same image at different degrees of downsampling. In this way, the image size to be processed can be reduced to an extent that is acceptable for a processor.

In the present case, the tissue detector 20 is adapted to use a downsampled version of the scanned slide. For example, the tissue detector 20 may be adapted to process the WSI 10 in a resolution that is approximately one fourth of the full resolution, i.e. a so called 5x magnification. The tissue detector 20 is further adapted to segment the WSI 10 into regions that comprise tissue 11. The output of the tissue detector 20 is tissue data 21, which indicates which pixels are tissue regions 11. Specifically, the tissue data 21 may comprise a mask in the size of the WSI 10, indicating for each pixel belongs to a tissue region 11 or not.

The tissue segmenter 30 receives the tissue data 21 as well as the WSI 10 to identify those regions in the WSI 10 that comprise characteristics of specific tissue types, like tumor regions. For example, such tumor regions are characterized by a high cell density and structural loss. To identify these regions, the tissue segmenter 30 is adapted to use a fully convolutional neural network. In the present example, the tissue segmenter 30 is adapted to identify tumor regions 31 in a representation of the WSI 10 that is less than the full resolution of the WSI. For example, the tissue segmenter 30 may operate on a representation of the WSI 10 that is more than a 5x magnification, e.g. 15x. The resulting tumor region data 31 once more is implemented as a mask, where the mask specifies only pixels in the WSI 10 that are part of a tumor region.

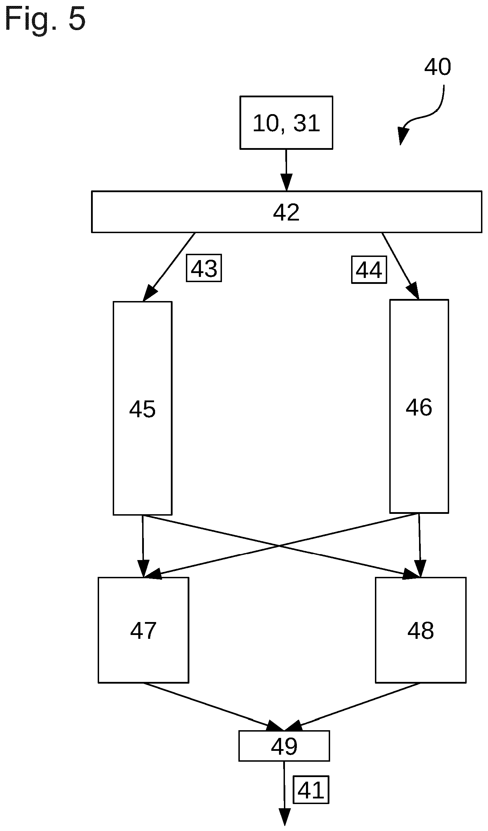

The tumor region data 31 as well as the WSI 10 are next provided to the single cell recognition and classification unit 40. The task of the single cell recognition and classification unit 40 is to detect the center of a cell as well as to classify whether the cell belongs to a certain tumor class, for example to a class of positive tumor cells or negative tumor cells. To accomplish this, the single cell recognition and classification unit 40 utilizes the full resolution of the WSI 10, i.e. a resolution that is higher than the resolution used by the tissue segmenter 30. The single cell recognition and classification unit 40 is further implemented using a fully convolutional neural network. The inner structure of the used neural network is further described with reference to Fig. 5.

The single cell recognition and classification unit 40 outputs cell data 41, which is input to the Region of Interest finder 50. The Region of Interest finder 50 is adapted to identify regions that comprise biomarker-positive tumor cells 14, so called region of interest 12 (cf. fig. 1). More in particular, the Region of Interest finder 50 is adapted to identify regions 12 in the whole slide image 10, which comprise a number of biomarker-positive tumor cells 14 that is above a predetermined threshold. For example, the Region of Interest finder 50 may be adapted to identify regions of interest 12 in the WSI 10 that comprise more than 400 biomarker-positive tumor cells 14. In addition to the Regions of Interest 12, the Region of Interest data 51 may further comprise for each Region of Interest 12, the number of biomarker-positive tumor cells 14 and biomarker-negative tumor cells 13. In addition or alternatively, the Region of Interest data 51 may comprise a diagnostic score, which indicates, for each region of interest 12, a ratio of biomarker-positive tumor cells 14 to biomarker-negative tumor cells 13. This ratio may further be computed by the Region of Interest finder 50.

The Region of Interest data 51 may subsequently be shown to a pathologist, who can use this data to perform diagnostics and treatment determination. Specifically, the Region of Interest data 51 may be overlaid to the WSI 10, such that those regions may be highlighted on a computing device, wherein the positive tumor cells 14 and negative tumor cells 13 are highlighted. Moreover, the Regions of Interest 12 can be shown in such a representation. Using such a representation, together with the diagnostic score, the pathologist can make a determination regarding a diagnosis. It is therefore explicitly not part of the present invention to conduct the actual diagnosis. Furthermore, the step of obtaining tissue samples and scanning those tissue samples is also not part of the present invention.

Fig. 4 shows a schematic of an intermediate processing step of the WSI 10. More in particular, the WSI 10 of Fig. 4 may be the WSI of Fig. 1. Therefore, the WSI 10 of Fig. 4 comprises biomarker-positive tumor cells 14, biomarker-negative tumor cells 13 as well as non-tumor cells 11. The WSI 10 is further divided into overlapping Fields of View 17 (in one embodiment, non-overlapping Field of View 17 are possible as well), which divide the WSI 10 into even quadrants. The size of the Fields of View 17 may vary, but in one preferred embodiment, the size of a Field of View 17 is 1000 pixel by 1000 pixel. As will be discussed in further detail with reference to Fig. 5, the different Fields of View 17 can be processed in parallel by the single cell recognition and classification unit 40, leading to a very efficient processing of a large WSI 10.

Fig. 5 shows a schematic of a single cell recognition and classification unit 40 which is implemented as an artificial neural network, in particular a fully convolutional neural network. As part of the artificial intelligence system of Fig. 3, the single cell recognition and classification unit 40 receives the WSI 10 as well as the tumor region data 31 as input. In the present embodiment, it is assumed that the WSI 10 also comprises a division of the WSI into Fields of View 17. In an alternative embodiment, it is also possible that the single cell recognition and classification unit 40 receives the Fields of View 17 as a separate input.

The input data is initially fed into an input layer 42, which is used to make the input data available to be processed by the artificial neural network. In particular, only a single Field of View 17 is actually fed into the neural network at a time but many Fields of View 17 can be processed in parallel using the same artificial neural network architecture. The tumor region data 31 is used to identify those areas on the WSI 10, which are of particular interest for further investigation. With this approach, the data to be analyzed can be dramatically reduced. Using the Fields of View approach, the data to be processed by the artificial neural network that is part of the single cell recognition and classification unit 40 can further be reduced and therefore also parallelized, which dramatically increases the processing speed of the entire system.

For processing by the single cell recognition and classification unit 40, the Field of View 17 of the WSI 10 is further divided into two sub images. A first sub image is referred to as the cell path 43, and a second sub image is referred to as the context path 44. In the described embodiment, the size of the cell path 43 is smaller than the size of the context path 44. That is, the number of pixels covered by the cell path 43 is smaller than the number of pixels covered by the context path 44.

The cell path 43 is then fed into a first set of cell path layers 45 that may comprise a plurality of hidden layers in the artificial neural network. Consequently, the cell path layers 45 comprise feature detectors that are parameterized during the training of the network, i.e. the weights of the neurons of the layers are set during training. Conversely, the context path 44 is input to a set of context path layers 46, which may comprise a plurality of hidden layers in the artificial neural network. Again, the context path layers 46 comprise feature detectors that are parameterized during training of the network. After the cell path layers 45 and context path layers 46, the detection of the cell center as well as the classification of the cells takes place.

For the detection of the cell center as well as the classification of the cells, the single cell recognition and classification unit 40 comprises detection layers 47, which receive the output of the cell path layers 45 as input. Moreover, the single cell recognition and classification unit 40 comprises a classification layer 48, which receives the output of the cell path layers 45 as well as the output of the context path layers 46. In one embodiment, the cell path and context path 44 are both taken into consideration for the detection of the cell centers as well as the classification. Other alternative configurations are possible. For example, in one embodiment, the detection of the cell centers only operates on the cell path 43 and the classification operates on both the cell path and the context path 44. The output of the detection layer and of the classification layer 48 are provided to an output layer 49, which provides the cell data 41.

In conclusion, the aforementioned artificial neural network is adapted to indicate for each pixel of a Field of View 17, whether that pixel is a cell center, and if it is not a cell center, the distance to the actual cell center as well as the class of the cell, for example being of a biomarker-positive tumor class or a biomarker-negative tumor class.

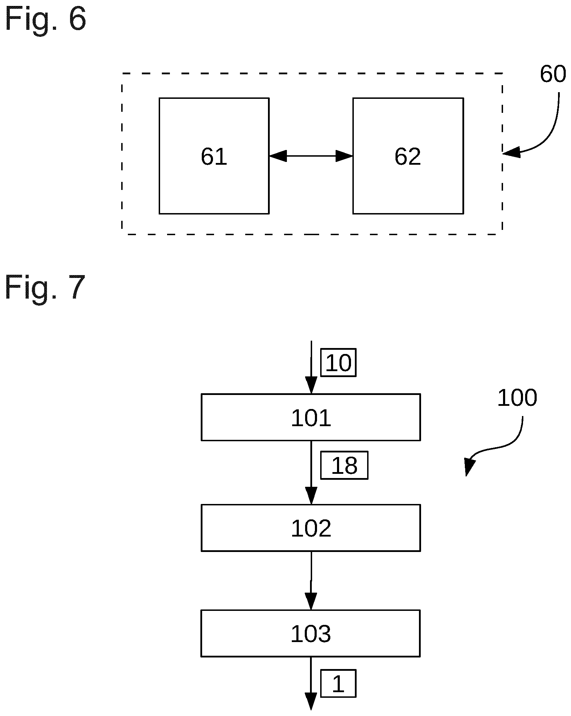

Fig. 6 shows a schematic of an exemplary classifying system 60. The classifying system 60 comprises an artificial intelligence processor 61 as well as an image recognition device 62. The classifying system 60 is adapted to implement any of the aforementioned methods. In particular, the artificial intelligence processor is adapted to implement a tissue detector 20, a tissue segmenter 30, a single cell recognition and classification unit 40 as well as a Region of Interest finder 50. The image recognition device 62 is adapted to receive WSI 10 from either a scanning device or some other external entity. In particular, the image recognition device 62 may be adapted to obtain a WSI 10 via an application programming interface (API), e.g. to obtain a WSI 10 over a network connection, for example the Internet.

The classifying system 60 may further comprise a storage medium to store the WSI 10 as well as other data required in connection with the processing of the WSI 10. More in particular, the classifying system 60 may be connected to the Internet such as users may access the classifying system 60 using a programming interface, for example via a web service.

Fig. 7 shows a schematic of a flow diagram of a method for training an artificial intelligence system 100. The method begins with a manual marking step 101, which receives the WSI 10 as an input. During the manual marking of the whole slide image 10, cell centers as well as classes of the respective cells are assigned. The step 101 may be the step or steps as described with respect to Fig. 2.

After a plurality of WSIs 10 have been marked, the marked WSIs 18 are entered into an artificial intelligence system in step 102. Lastly, the method comprises a training of the artificial intelligence system 103, which results in a trained artificial intelligence system 1. For example, the training of the artificial intelligence system 103 may comprise training an artificial neural network of the tissue segmenter 30 as well as the artificial neural network of the single cell recognition and classification unit 40.

### Reference numerals:

- 1: Artificial intelligence system
- 10: whole slide image
- 11: tissue area
- 12: Region of Interest
- 13: negative tumor cell
- 14: positive tumor cell
- 15: Cell center
- 16: digital marking tool
- 17: Patch/Tile/Field of View
- 18: marked/labelled whole slide image
- 20: Tissue detector
- 21: tissue data
- 30: Tissue segmenter
- 31: Tumor region data
- 40: Single Cell recognition and classification unit
- 41: cell data
- 42: input layer
- 43: cell path
- 44: context path
- 45: cell path layers
- 46: context path layers
- 47: detection layer
- 48: classification layer
- 49: output layer
- 50: Region of Interest finder
- 51: Region of interest data
- 60: classifying system
- 61: artificial intelligence processor
- 62: image recognition device
- 100: method for training an artificial intelligence system
- 101: manual marking of WSIs
- 102: entering marked WSIs into artificial intelligence system
- 103: training the artificial intelligence system

## Claims

1. Method for training an artificial intelligence system (1) and for recognizing and classifying cells for histopathological tissue examination, under use of the artificial intelligence system (1), wherein in a learning stage, the following steps are performed:
a) manual marking of cells (13, 14) to be detected by the artificial intelligence system (1) in digital images, for example whole slide images (10), WSIs, of histological tissue sections,
b) each marking is assigned to either one of at least one tumor cell class or one of at least one non-tumor cell class, wherein the method further comprises providing a statistical distribution indicating a probability that a pixel is a cell center around the actual cell center of a particular cell, whereby the statistical distribution is used to create marked digital images that reflect the statistical distribution of the cell centers;
c) a number of marked digital images, in particular WSIs (18), according to steps a) and b) are entered into the artificial intelligence system (1) for deep learning purposes,
d) the artificial intelligence system (1) learns characteristics of the at least one tumor cell class and the at least one non-tumor cell class from the marked digital images, in particular WSIs, to establish a model for cell detection and classification,
in an analysis stage, the following steps are performed:
e) obtaining digital images, in particular WSIs (10), of histological tissue sections,
f) according to the model, the artificial intelligence system (1) detects the cells and classifies them into the at least one tumor cell class and/or the at least one non-tumor cell class.

2. Method according to any of the preceding claims, wherein
the digital image, in particular the WSI (10), is subdivided in subareas by tiling in fields of view (17), FOV.

3. Method according to claim 2, wherein
the FOVs (17) are cropped to contain either a cell area, cell path (43), or a cell surrounding area, context path (44).

4. Method according to claim 4, wherein
the FOV (17) containing the cell area (43) is chosen to be smaller than the FOV (17) containing the cell surrounding area (44).

5. Method according to claim 3, wherein
cell path (43) and context path (44) are processed separately and in parallel by the artificial intelligence system (1), in particular an artificial neural network.

6. Method according to one of claims 2 to 5, wherein
the artificial intelligence system (1) predicts for every individual pixel of a FOV (17), if it represents the cell center (15) and if not, the distance to the cell center (15).

7. Method according to one of claims 2 to 6, wherein
the artificial intelligence system (1) classifies every individual pixel of a FOV (17) into the at least one tumor cell class or into the at least one non-tumor cell class.

8. Method according to one of the preceding claims, wherein
the manual marking (101) is performed by point annotations, which are placed into the middle of the tumor cells thereby marking the center of a cell (15).

9. Method according to one of the preceding claims, wherein
the artificial intelligence system (1) comprises a tumor recognition algorithm (50) which selects in the digital image to be analyzed, in particular the WSI (10), regions (12) with a higher density of tumor cells than the surrounding regions and the detection and classifying step, in particular step f), is performed in the regions of higher density of tumor cells, in particular only performed in the regions of higher density of tumor cells.

10. Method according to claim 9, wherein
a tissue detection model is preceding the tumor recognition algorithm (50), wherein the tissue detection model is adapted to detect tissue in the digital image, thereby segmenting the digital image into tissue and non-tissue regions.

11. Method according to one of the preceding claims, wherein
the classified cells of step f) are grouped and statistically analyzed resulting in at least one diagnostic score.

12. Computer-readable medium, storing instructions that, when executed by at least one processor, cause the at least one processor to implement a method according to any of the preceding claims.

13. Classifying system (60) for performing a method according to one of the preceding claims, comprising
an artificial intelligence processor (61) connected to an image recognition device (62) adapted to obtain digital images, in particular whole slide images (10), WSIs, of histological tissue sections or cytological smears and adapted to provide the digital images, in particular the WSIs, to the artificial intelligence processor,
which artificial intelligence processor (61) is configured to analyze the digital images, in particular WSIs (10), and to classify the analyzed data into at least one tumor class and/or into at least one non-tumor class after a learning stage with manually marked and classified image data (18), wherein learning phase comprises providing of a statistical distribution indicating a probability that a pixel is a cell center around the actual cell center of a particular cell, whereby the statistical distribution is used to create marked digital image data that reflect the statistical distribution of the cell centers, whereby the artificial intelligence processor (61) comprises an artificial neuronal network, ANN, which ANN is configured in said learning stage to adjust connections between its neurons based on the marked and classified image data (18), and that the system is configured in an analysis stage to classify the image data of the digital image, in particular WSI (10), to be analyzed into the at least one tumor class and the at least one non-tumor class based on the established adjusted connections between the neurons.

14. Classifying system (60) according claim 13, wherein
the artificial intelligence processor (61) is configured to subdivide the digital image, in particular the WSI (10), into subareas field of view (17), FOV, and to perform the classification of the subareas FOV (17) separately, which FOV (17) are preferably cropped into a cell area, cell path (43), and a cell cell surrounding area, context path (44).

15. Classifying system (60) according to claim 14, wherein
the ANN comprises several sub-structures (45, 46) which are configured to independently process at least one cell area and at least one cell cell surrounding area of the digital image, in particular WSI (10), respectively, in particular of at least one FOV, in parallel, particularly specialized to the cell areas, cell path, on one hand and to the cell surrounding areas, context path, on the other hand.

## Patentansprüche

1. Verfahren zum Trainieren eines Systems der künstlichen Intelligenz (1) sowie zum Erkennen und Klassifizieren von Zellen für die histopathologische Gewebeuntersuchung unter Verwendung des Systems der künstlichen Intelligenz (1), bei dem in einer Lernphase die folgenden Schritte ausgeführt werden:
a) manuelles Markieren von Zellen (13, 14), die von dem System der künstlichen Intelligenz (1) erkannt werden sollen, in digitalisierten Bildern, beispielsweise Whole Slide Images (10), WSI, von histologischen Gewebeschnitten,
b) jede Markierung wird entweder einer von mindestens einer Tumorzelle-Klasse oder einer von mindestens einer Nicht-Tumorzelle-Klasse zugeordnet, wobei das Verfahren ferner das Bereitstellen einer statistischen Verteilung umfasst, die eine Wahrscheinlichkeit, dass ein Pixel ein Zellzentrum ist, um das tatsächliche Zellzentrum einer bestimmten Zelle angibt, wobei die statistische Verteilung zum Erzeugen von markierten digitalisierten Bildern verwendet wird, die die statistische Verteilung der Zellzentren abbilden;
c) eine Anzahl markierter digitalisierter Bilder, insbesondere WSI (18), gemäß den Schritten a) und b) wird in das System der künstlichen Intelligenz (1) zu Zwecken des Deep Learning eingegeben,
d) das System der künstlichen Intelligenz (1) lernt Eigenschaften der mindestens einen Tumorzelle-Klasse und der mindestens einen Nicht-Tumorzelle-Klasse anhand der markierten digitalisierten Bilder, insbesondere WSI, um ein Modell für die Erkennung und Klassifizierung von Zellen zu erstellen,
in einer Analysephase werden die folgenden Schritte ausgeführt:
e) Erhalten von digitalisierten Bildern, insbesondere WSI (10), von histologischen Gewebeschnitten,
f) das System der künstlichen Intelligenz (1) erkennt nach Maßgabe des Modells die Zellen und teilt sie der mindestens einen Tumorzelle-Klasse und/oder der mindestens einen Nicht-Tumorzelle-Klasse zu.

2. Verfahren nach einem der vorhergehenden Ansprüche, wobei
das digitalisierte Bild, insbesondere das WSI (10), durch Kacheln in Sichtfelder (17), FOV, in Teilbereiche unterteilt wird.

3. Verfahren nach Anspruch 2, wobei
die FOV (17) derart zugeschnitten werden, dass sie entweder einen Zellbereich, Zellpfad (43), oder einen Zellumgebungsbereich, Kontextpfad (44), enthalten.

4. Verfahren nach Anspruch 4, wobei
das FOV (17), das den Zellbereich (43) enthält, derart ausgewählt wird, dass es kleiner ist als das FOV (17), das den Zellumgebungsbereich (44) enthält.

5. Verfahren nach Anspruch 3, wobei
der Zellpfad (43) und der Kontextpfad (44) vom System der künstlichen Intelligenz (1), insbesondere einem künstlichen neuronalen Netz, getrennt und parallel verarbeitet werden.

6. Verfahren nach einem der Ansprüche 2 bis 5, wobei
das System der künstlichen Intelligenz (1) für jedes einzelne Pixel eines FOV (17) vorhersagt, ob es das Zellzentrum (15) darstellt, und wenn nicht, die Entfernung zum Zellzentrum (15).

7. Verfahren nach einem der Ansprüche 2 bis 6, wobei
das System der künstlichen Intelligenz (1) jedes einzelne Pixel eines FOV (17) der mindestens einen Tumorzelle-Klasse oder der mindestens einen Nicht-Tumorzelle-Klasse zuteilt.

8. Verfahren nach einem der vorherigen Ansprüche, wobei
die manuelle Markierung (101) durch Punktannotationen erfolgt, die in der Mitte der Tumorzellen platziert werden, wodurch das Zentrum einer Zelle (15) markiert wird.

9. Verfahren nach einem der vorherigen Ansprüche, wobei
das System der künstlichen Intelligenz (1) einen Tumorerkennungsalgorithmus (50) umfasst, der in dem zu analysierenden digitalisierten Bild, insbesondere dem WSI (10), Gebiete (12) mit einer höheren Tumorzellendichte als in den umliegenden Gebieten auswählt, und der Schritt des Erkennens und Klassifizierens, insbesondere Schritt f), in den Gebieten mit einer höheren Tumorzellendichte ausgeführt wird, insbesondere ausschließlich in den Gebieten mit einer höheren Tumorzellendichte ausgeführt wird.

10. Verfahren nach Anspruch 9, wobei
ein Gewebeerkennungsmodell dem Tumorerkennungsalgorithmus (50) vorausgeht, wobei das Gewebeerkennungsmodell dazu geeignet ist, Gewebe im digitalisierten Bild zu erkennen und dadurch das digitalisierte Bild in Gewebe- und Nicht-Gewebe-Gebiete zu segmentieren.

11. Verfahren nach einem der vorhergehenden Ansprüche, wobei die klassifizierten Zellen von Schritt f) gruppiert und statistisch analysiert werden, was in mindestens einer diagnostischen Bewertung resultiert.

12. Computerlesbares Medium, das Anweisungen speichert, die, wenn sie von mindestens einem Prozessor ausgeführt werden, bewirken, dass der mindestens eine Prozessor ein Verfahren nach einem der vorhergehenden Ansprüche implementiert.

13. Klassifizierungssystem (60) zum Ausführen eines Verfahrens nach einem der vorhergehenden Ansprüche, umfassend
einen Prozessor für künstliche Intelligenz (61), der mit einer Bilderkennungsvorrichtung (62) verbunden ist, die dazu geeignet ist, digitalisierte Bilder, insbesondere Whole Slide Images (10), WSI, von histologischen Gewebeschnitten oder zytologischen Abstrichen zu erhalten, und dazu geeignet ist, die digitalisierten Bilder, insbesondere die WSI, dem Prozessor für künstliche Intelligenz bereitzustellen,
wobei der Prozessor für künstliche Intelligenz (61) dazu eingerichtet ist, die digitalisierten Bilder, insbesondere WSI (10), zu analysieren und die analysierten Daten nach einer Lernphase mit manuell markierten und klassifizierten Bilddaten (18) in mindestens eine Tumor-Klasse und/oder in mindestens eine Nicht-Tumor-Klasse einzuteilen, wobei die Lernphase das Bereitstellen einer statistischen Verteilung umfasst, die eine Wahrscheinlichkeit, dass ein Pixel ein Zellzentrum ist, um das tatsächliche Zellzentrum einer bestimmten Zelle angibt, wobei die statistische Verteilung verwendet wird, um markierte digitale Bilddaten zu erzeugen, die die statistische Verteilung der Zellzentren abbilden, wobei der Prozessor für künstliche Intelligenz (61) ein künstliches neuronales Netz, ANN, umfasst, wobei das ANN dazu eingerichtet ist, in der Lernphase Verbindungen zwischen seinen Neuronen auf der Grundlage der markierten und klassifizierten Bilddaten (18) anzupassen, und wobei das System dazu eingerichtet ist, in einer Analysephase die Bilddaten des zu analysierenden digitalisierten Bilds, insbesondere des WSI (10), basierend auf den hergestellten angepassten Verbindungen zwischen den Neuronen in die mindestens eine Tumor-Klasse und die mindestens eine Nicht-Tumor-Klasse einzuteilen.

14. Klassifizierungssystem (60) nach Anspruch 13, wobei
der Prozessor für künstliche Intelligenz (61) dazu eingerichtet ist, das digitalisierte Bild, insbesondere das WSI (10), in Teilbereiche-Sichtfelder (17), FOV, zu unterteilen und die Klassifizierung der Teilbereiche-FOV (17) getrennt durchzuführen, wobei die FOV (17) vorzugsweise zu einem Zellbereich, Zellpfad (43), und einem Zellumgebungsbereich, Kontextpfad (44), zugeschnitten sind.

15. Klassifizierungssystem (60) nach Anspruch 14, wobei
das ANN mehrere Unterstrukturen (45, 46) umfasst, die dazu eingerichtet sind, jeweils unabhängig voneinander mindestens einen Zellbereich und mindestens einen Zellumgebungsbereich des digitalisierten Bilds, insbesondere des WSI (10), insbesondere des mindestens einen FOV, parallel zu verarbeiten, insbesondere spezialisiert auf die Zellbereiche, Zellpfad, einerseits und die Zellumgebungsbereiche, Kontextpfad, andererseits.

## Revendications

1. Procédé d'entraînement d'un système d'intelligence artificielle (1) et de reconnaissance et de classement de cellules pour un examen histopathologique de tissu, à l'aide du système d'intelligence artificielle (1), dans lequel, dans une étape d'apprentissage, les étapes suivantes sont effectuées :
a) le marquage manuel de cellules (13, 14) à détecter par le système d'intelligence artificielle (1) dans des images numériques, par exemple des images de lames entières (10), ILE, de sections histologiques de tissu,
b) chaque marquage est attribué soit à l'une d'au moins une classe de cellules tumorales, soit à l'une d'au moins une classe de cellules non tumorales, le procédé comprenant en outre la fourniture d'une distribution statistique indiquant une probabilité qu'un pixel soit un centre cellulaire autour du centre cellulaire réel d'une cellule particulière, la distribution statistique étant utilisée pour créer des images numériques marquées qui reflètent la distribution statistique des centres cellulaires ;
c) un certain nombre d'images numériques marquées, en particulier des ILE (18), selon les étapes a) et b) sont entrées dans le système d'intelligence artificielle (1) à des fins d'apprentissage profond,
d) le système d'intelligence artificielle (1) apprend des caractéristiques de ladite au moins une classe de cellules tumorales et de ladite au moins une classe de cellules non tumorales à partir des images numériques marquées, en particulier des ILE, afin d'établir un modèle pour la détection et le classement de cellules,
dans une étape d'analyse, les étapes suivantes sont effectuées :
e) l'obtention d'images numériques, en particulier des ILE (10), de sections histologiques de tissu,
f) selon le modèle, le système d'intelligence artificielle (1) détecte les cellules et les classe dans ladite au moins une classe de cellules tumorales et/ou ladite au moins une classe de cellules non tumorales.

2. Procédé selon l'une quelconque des revendications précédentes, dans lequel
l'image numérique, en particulier l'ILE (10), est subdivisée en sous-zones par création de mosaïques dans des champs de vision (17), CDV.

3. Procédé selon la revendication 2, dans lequel
les CDV (17) sont recadrés pour contenir soit une zone cellulaire, un trajet cellulaire (43), soit une zone entourant une cellule, un trajet de contexte (44).

4. Procédé selon la revendication 4, dans lequel
le CDV (17) contenant la zone cellulaire (43) est choisi pour être plus petit que le CDV (17) contenant la zone entourant une cellule (44).

5. Procédé selon la revendication 3, dans lequel
trajet cellulaire (43) et trajet de contexte (44) sont traités séparément et en parallèle par le système d'intelligence artificielle (1), en particulier un réseau neuronal artificiel.

6. Procédé selon l'une des revendications 2 à 5, dans lequel
le système d'intelligence artificielle (1) prédit pour chaque pixel individuel d'un CDV (17) s'il représente le centre cellulaire (15) et si tel n'est pas le cas, la distance par rapport au centre cellulaire (15).

7. Procédé selon l'une des revendications 2 à 6, dans lequel
le système d'intelligence artificielle (1) classe chaque pixel individuel d'un CDV (17) dans ladite au moins une classe de cellules tumorales ou dans ladite au moins une classe de cellules non tumorales.

8. Procédé selon l'une des revendications précédentes, dans lequel
le marquage manuel (101) est effectué par des annotations ponctuelles, qui sont placées au milieu des cellules tumorales, ce qui permet de marquer le centre d'une cellule (15).

9. Procédé selon l'une des revendications précédentes, dans lequel
le système d'intelligence artificielle (1) comprend un algorithme de reconnaissance de tumeur (50) qui sélectionne dans l'image numérique à analyser, en particulier l'ILE (10), des régions (12) présentant une densité plus élevée de cellules tumorales que dans les régions environnantes et l'étape de détection et de classement, en particulier l'étape f), est effectuée dans les régions de densité plus élevée de cellules tumorales, en particulier uniquement effectuée dans les régions de densité plus élevée de cellules tumorales.

10. Procédé selon la revendication 9, dans lequel
un modèle de détection tissulaire précède l'algorithme de reconnaissance de tumeur (50), le modèle de détection tissulaire étant conçu pour détecter un tissu dans l'image numérique, ce qui permet de segmenter l'image numérique en régions tissulaires et non tissulaires.

11. Procédé selon l'une des revendications précédentes, dans lequel les cellules classées de l'étape f) sont regroupées et analysées statistiquement, conduisant à au moins un score de diagnostic.

12. Support lisible par ordinateur, stockant des instructions qui, lorsqu'elles sont exécutées par au moins un processeur, amènent ledit au moins un processeur à mettre en œuvre un procédé selon l'une quelconque des revendications précédentes.

13. Système de classement (60) destiné à effectuer un procédé selon l'une des revendications précédentes, comprenant
un processeur d'intelligence artificielle (61) connecté à un dispositif de reconnaissance d'image (62) conçu pour obtenir des images numériques, en particulier des images de lames entières (10), des ILE, de sections histologiques de tissu ou de frottis cytologiques et conçu pour fournir les images numériques, en particulier les ILE, au processeur d'intelligence artificielle,
lequel processeur d'intelligence artificielle (61) est configuré pour analyser les images numériques, en particulier des ILE (10), et pour classer les données analysées dans au moins une classe tumorale et/ou dans au moins une classe non tumorale après une étape d'apprentissage à l'aide de données d'image (18) marquées manuellement et classées, dans lequel la phase d'apprentissage comprend la fourniture d'une distribution statistique indiquant une probabilité qu'un pixel soit un centre cellulaire autour du centre cellulaire réel d'une cellule particulière, la distribution statistique étant utilisée pour créer des données d'image numérique marquées qui reflètent la distribution statistique des centres cellulaires, le processeur d'intelligence artificielle (61) comprenant un réseau neuronal artificiel, RNA, lequel RNA est configuré dans ladite étape d'apprentissage pour ajuster des connexions entre ses neurones sur la base des données d'image (18) marquées et classées et le système étant configuré dans une étape d'analyse pour classer les données d'image de l'image numérique, en particulier une ILE (10), à analyser dans ladite au moins une classe tumorale et dans ladite au moins une classe non tumorale sur la base des connexions ajustées établies entre les neurones.

14. Système de classement (60) selon la revendication 13, dans lequel
le processeur d'intelligence artificielle (61) est configuré pour subdiviser l'image numérique, en particulier l'ILE (10), en sous-zones de champ de vision CDV (17) et pour effectuer le classement des sous-zones de CDV (17) séparément, lesquels CDV (17) sont de préférence recadrés dans une zone cellulaire, un trajet cellulaire (43), et une zone entourant une cellule, un trajet de contexte (44).

15. Système de classement (60) selon la revendication 14, dans lequel
le RNA comprend plusieurs sous-structures (45, 46) qui sont configurées pour traiter indépendamment respectivement au moins une zone cellulaire et au moins une zone entourant une cellule de l'image numérique, en particulier une ILE (10), en particulier d'au moins un CDV, en parallèle, particulièrement spécialisé pour les zones cellulaires, un trajet cellulaire, d'une part et pour les zones entourant une cellule, le trajet de contexte, d'autre part.
